# EUROPEAN PATENT SPECIFICATION

(11) **EP 4 008 921 B1**
(45) Date of publication and mention of the grant of the patent: **09.10.2024**
(21) Application number: 19940365.0
(22) Date of filing: 02.08.2019
(51) Int. Cl.: F16D 11/10, F16D 11/00, F16D 11/14

(54) **DOG CLUTCH**
KLAUENKUPPLUNG
EMBRAYAGE À GRIFFES

(43) Date of publication of application: 08.06.2022
(73) Proprietor: Univance Corporation, Kosai-city, Shizuoka 431-0494 (JP)
(72) Inventor: YAMAUCHI Yoshihiro, Kosai- City, Shizuoka 4310494 (JP)
(74) Representative: Prüfer & Partner mbB Patentanwälte · Rechtsanwälte
(86) International application number: PCT/JP2019/030507
(87) International publication number: WO 2021/024304

(56) References cited:
- GB-A- 2 472 838
- JP-A- 2018 044 641
- JP-A- 2018 071 633
- JP-A- 2019 127 976
- JP-A- 2019 127 976
- JP-U- S5 550 322
- JP-U- S5 852 334
- US-A1- 2018 073 599

## Description

### [TECHNICAL FIELD]

The present invention relates to a dog clutch having a function of communicating and interrupting power between a driving member and a driven member that are coaxially located.

### [BACKGROUND ART]

In accordance with JP 2012 031881 A (Patent Publication 1), a dog clutch in which engagement is implemented by protruding parts provided in opposed cylindrical end faces is known.

Further, GB 2 472 838 A (Patent Publication 2) relates to a dog drive assembly for an automotive gearbox that includes a hub for coupling to a gear shaft and a clutch ring slidably coupled to the hub for rotation with the hub. The clutch ring includes a plurality of dogs and is slideable along the hub to engage or disengage the dogs with cooperating dogs on a gear that is rotatably mounted coaxially with respect to the hub in order to selectively couple or uncouple the hub to the gear. The slideable coupling between the clutch ring and the hub is provided by a plurality of splines projecting inwardly from the clutch ring which cooperate with slots the circumferential surface of the hub.

US 2018/073599 A1 (Patent Publication 3) relates to a vehicle transmission that has a plurality of gear positions that are to be selectively established, and includes an input shaft, a first shaft, a second shaft, an output shaft, at least one first drive gear disposed on the first shaft, at least one second drive gear disposed on the second shaft, at least one driven gear disposed on the output shaft, a dog clutch connecting and disconnecting between the input shaft and each of the first and second shafts, and a synchronous meshing apparatus. The synchronous meshing apparatus connects and disconnects between each of the first and second shafts and the output shaft, and, when connecting between each of the first and second shafts and the output shaft, establishes a power transmission path from each of the first and second shafts to the output shaft via a selected one of the at least one first or second drive gear.

JP 2019 127976 A (Patent Publication 4) relates to a transmission, including a drive mechanism for moving sleeves in a rotation axis direction by imparting drive forces thereto, and switching engagement and disengagement of a sleeve tooth part and a gear tooth part, and a drive control part for controlling movement of the sleeves in the rotation axis direction by controlling drive forces imparted to the sleeves by the drive mechanism. When a collision between the sleeve tooth part and the gear tooth part is detected by a collision detection part when moving the sleeves to sides of gear-change gears the drive control part increases the drive forces, and energizes the sleeve tooth part to the sides of the gear-change gears by a spring member.

### [RELATED ART LITERATURE]

### [Patent Publication]

[Patent Publication 1] JP 2012 031881 A
[Patent Publication 2] GB 2 472 838 A
[Patent Publication 3] US 2018/073599 A1
[Patent Publication 4] JP 2019 127976 A

### [SUMMARY OF THE INVENTION]

### [PROBLEM TO BE SOLVED BY THE INVENTION]

For this type of dog clutches, it is required that the strength of a protruding part on which force in a rotation direction is exerted is enhanced.

The present invention has been made to meet this requirement and an object of the prevent invention is to provide a dog clutch in which the strength of a protruding part can be enhanced.

### [MEANS OF SOLVING THE PROBLEM]

To achieve the object, a dog clutch according to the present invention is as defined in claim 1.

### [EFFECTS OF THE INVENTION]

In a dog clutch according to Claim 1, a plurality of the protruding parts axially protruding from an end face of the coupling member are coupled with the sleeve around the center axis at intervals in between. The grooves are formed on the outer circumferential surface of the shaft member on which the sleeve is disposed. The teeth engaged with the grooves are formed at least on inner surfaces of the protruding parts. Since the grooves and the teeth are parallel to the center axis of the shaft member, the sleeve can be axially moved relative to the shaft member. When the sleeve is axially moved and engagement is made by the protruding parts, torque is transmitted between the protruding parts and the shaft member via the teeth formed in the protruding parts. Because of the foregoing, bending stress on the protruding parts can be more suppressed as compared with cases where the teeth are not formed in the protruding parts. Since the strength of the protruding parts can be enhanced, damaging to the protruding parts and the coupling member originating from a corner formed by the coupling member and the protruding parts due to exertion of force in the rotation direction on the protruding parts can be suppressed when engagement is made by the protruding parts.

In a dog clutch according to Claim 2, the teeth are formed only in the protruding parts. Therefore, reduction in a cross-sectional area of the coupling member due to the teeth can be more suppressed as compared with cases where the teeth are formed also in the coupling member. Therefore, in addition to the effect of Claim 1, reduction in the strength of the coupling member can be suppressed. Further, an area of each tooth rubbed against each groove can be more reduced as compared with cases where the teeth are formed not only in the protruding parts but also in the coupling member; therefore, friction between the grooves and the teeth can be suppressed.

In a dog clutch according to Claim 3, each tooth is completely in an angle shape throughout the axial length thereof; therefore, in addition to the effect of Claim 1 or 2, the strength of the teeth can be ensured.

In a dog clutch according to Claim 4, the shaft member includes: a shaft on which a mating member provided with the protruding parts engaged with the protruding parts of the sleeve is disposed; and a cylindrical hub disposed on the shaft in axial alignment with the mating member. An inner circumferential part of the hub is fixed on the shaft, the sleeve is disposed at an outer circumferential part connecting to the outside of the inner circumferential part in the radial direction, and a tip of the outer circumferential part juts out in the direction of an axial line than the inner circumferential part. Since a part of the mating member exists inside the tip in the radial direction, an axial dimension of alignment of the hub and the mating member can be reduced by an amount equivalent to the tip. Therefore, in addition to the effect of any of Claims 1 to 3, an axial size of the dog clutch can be reduced.

### [BRIEF DESCRIPTION OF THE DRAWINGS]

[FIG. 1] FIG. 1 is a sectional view of a transmission in which a dog clutch according to an embodiment is disposed;
[FIG. 2] FIG. 2 is a perspective view of a sleeve; and
[FIG. 3] FIG. 3 is a perspective view of a hub in which a sleeve is disposed.

### [MODE FOR CARRYING OUT THE INVENTION]

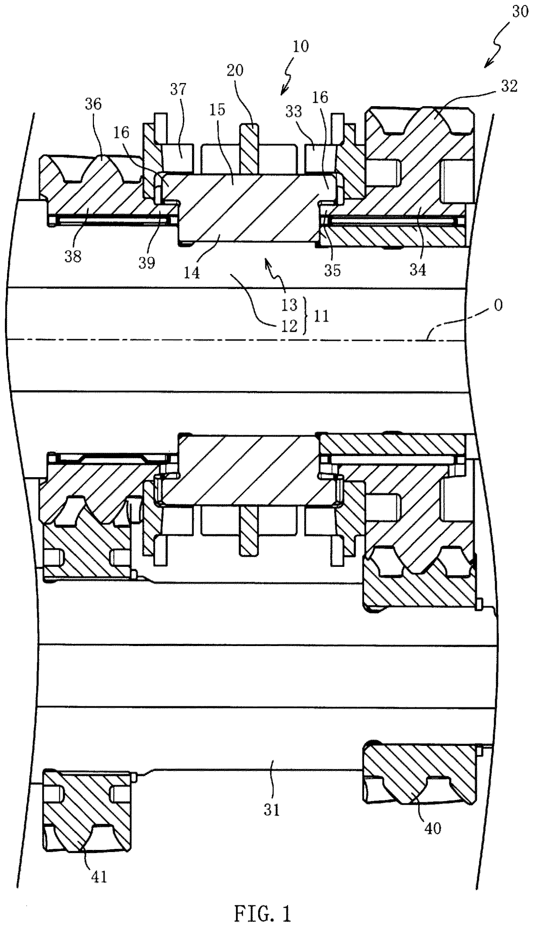

Hereafter, a description will be given to a preferred embodiment of the present invention with reference to the accompanying drawings. First, a description will be given to a general configuration of a dog clutch 10 with reference to FIG. 1. FIG. 1 is a sectional view of a transmission 30 in which the dog clutch 10 according to an embodiment is disposed. In FIG. 1, the dog clutch 10 disposed in the transmission 30 is centered and illustration of a portion of the transmission 30 located outside in the axial direction is omitted.

The dog clutch 10 is a device that communicates and interrupts power between a shaft member 11 and a mating member located on an identical center axis O and includes a sleeve 20. In the present embodiment, the dog clutch 10 is used in the transmission 30 of a constant-mesh type. The shaft member 11 is a drive axle and the mating member is a first drive gear 32 and a second drive gear 36 different from each other in a number of teeth. The transmission 30 includes a second shaft 31 (driven shaft) disposed in parallel to the center axis O of the shaft member 11 and a first driven gear 40 and a second driven gear 41 constantly engaged with the first drive gear 32 and the second drive gear 36 respectively are disposed on the second shaft 31.

The shaft member 11 includes: a shaft 12 extended along the center axis O; and a cylindrical hub 13 disposed on the shaft 12 so that the cylindrical hub cannot be rotated relative to the shaft 12 and cannot be axially moved. The hub 13 includes: an inner circumferential part 14 fixed on the shaft 12; and an outer circumferential part 15 connecting to the outside of the inner circumferential part 14 in the radial direction. A tip 16 is provided on both sides of the outer circumferential part 15 in the axial direction. The tips 16 jut out farther in the axial direction than the inner circumferential part 14. The sleeve 20 is disposed at the outer circumferential part 15 of the hub 13.

The first drive gear 32 is a cylindrical member disposed on the shaft 12 so that the first drive gear can be rotated relative to the shaft 12 and cannot be axially moved. The first drive gear 32 is disposed next to the hub 13 with the sleeve 20 disposed thereon in the axial direction. The first drive gear 32 is provided on its axial end face facing toward the sleeve 20 with protruding parts 33 protruding in the axial direction. The protruding parts 33 are positioned outside a tip 16 of the hub 13 in the radial direction. Of a cylindrical part 34 of the first drive gear 32 located inside the protruding parts 33 in the radial direction, an axial end 35 is positioned inside a tip 16 of the hub 13 in the radial direction.

The second drive gear 36 is a cylindrical member disposed on the shaft 12 so that the second drive gear can be rotated relative to the shaft 12 and cannot be axially moved. The second drive gear 36 is disposed next to the hub 13 in the axial direction on the opposite side to the first drive gear 32. The second drive gear 36 is provided on its axial end face facing toward the sleeve 20 with protruding parts 37 protruding in the axial direction. The protruding parts 37 are positioned outside a tip 16 of the hub 13 in the radial direction. Of a cylindrical part 38 of the second drive gear 36 located inside the protruding parts 37 in the radial direction, an axial end 39 is positioned inside a tip 16 of the hub 13 in the radial direction.

The first drive gear 32 is constantly engaged with the first driven gear 40 disposed on the second shaft 31. The first driven gear 40 is a cylindrical member disposed on the second shaft 31 so that the first driven gear cannot be rotated relative to the second shaft 31 and cannot be axially moved. The second drive gear 36 is constantly engaged with the second driven gear 41 disposed on the second shaft 31. The second driven gear 41 is a cylindrical member disposed on the second shaft 31 so that the second driven gear cannot be rotated relative to the second shaft 31 and cannot be axially moved.

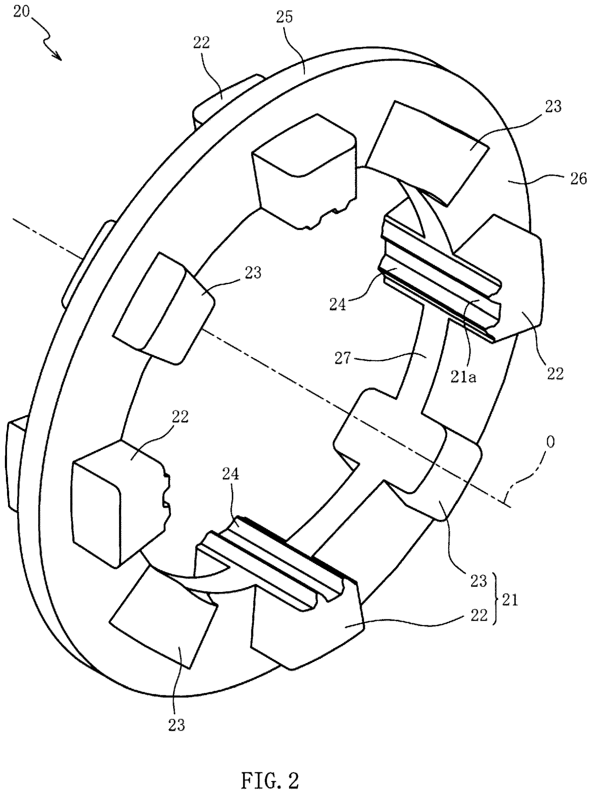

A description will be given to the sleeve 20 with reference to FIG. 2. FIG. 2 is a perspective view of the sleeve 20. As shown in FIG. 2, the sleeve 20 includes a plurality of protruding parts 21 and a coupling member 25 coupling the protruding parts 21 around the center axis O at intervals in between. The coupling member 25 is fit into a fork (not shown) . In the present embodiment, the coupling member 25 is integrally formed.

Each protruding part 21 is formed in a shape of a square pole extended along the center axis O. The protruding parts 21 protrude in the axial direction from both axial end faces 26 of the coupling member 25. In the present embodiment, eight protruding parts 21 protrude from one of the end faces 26 of the coupling member 25 and eight protruding parts 21 protrude from the other of the end faces 26 in the same positions as the protruding parts 21 on the one end face. According to the invention, the protruding parts 21 include a first tooth 22 and a second tooth 23 different in the length of axial protrusion from an end face 26. Since each first tooth 22 is longer in axial protrusion from an end face 26 than each second tooth 23, a tip of each first tooth 22 in the axial direction is axially positioned outside a tip of each second tooth 23 in the axial direction. The first teeth 22 and the second teeth 23 are alternately disposed around the center axis O.

In an inner surface 21a of each protruding part 21 facing toward the center axis O, a tooth 24 parallel to the center axis O is formed. Further, in a part of the inner surface 27 of the coupling member 25 facing toward the center axis O to which a protruding part 21 connects, a tooth 24 parallel to the center axis O is formed. Each tooth 24 continuously connects to the coupling member 25 and a protruding part 21 protruding from an end face 26 of the coupling member 25. As a result, the teeth 24 are less prone to be damaged.

In the present embodiment, the teeth 24 are formed only in protruding parts 21. "The teeth 24 are formed only in protruding parts 21" means to include those teeth connecting to the teeth 24 in protruding parts 21 that are formed in the inner surface 27 of the coupling member 25. But, those teeth 24 formed in the inner surface 27 of the coupling member 25 where a protruding part 21 is not formed are excluded.

The teeth 24 are provided throughout the axial length of protruding parts 21 and areas of the coupling member 25 sandwiched between protruding parts 21. All the teeth 24 provided in protruding parts 21 are completely in an angle shape throughout the length thereof in the axial direction. That is, a shape of a section of each of the individual teeth 24 perpendicular to the center axis O is identical throughout the axial length of each protruding part 21. In the present embodiment, a tooth 24 is formed in each first tooth 22 but a tooth 24 is not formed in each second tooth 23.

If teeth 24 are formed in the entire perimeter of the inner surface 27 of the coupling member 25 in addition of the inner surfaces 21a of the protruding part 21 with an identical pitch, an angle shape of the teeth 24 is prone to become imperfect in the boundary between each protruding part 21 and the coupling member 25. In the present embodiment, the teeth 24 are provided in protruding parts 21 and areas of the coupling member 25 sandwiched between protruding parts 21 and the tooth 24 is not provided in other areas. Therefore, the tooth 24 need not be formed in the boundary between each protruding part 21 and the coupling member 25. For this reason, an angle shape of the teeth 24 formed in protruding parts 21 with an identical pitch can be easily made perfect throughout the axial length thereof.

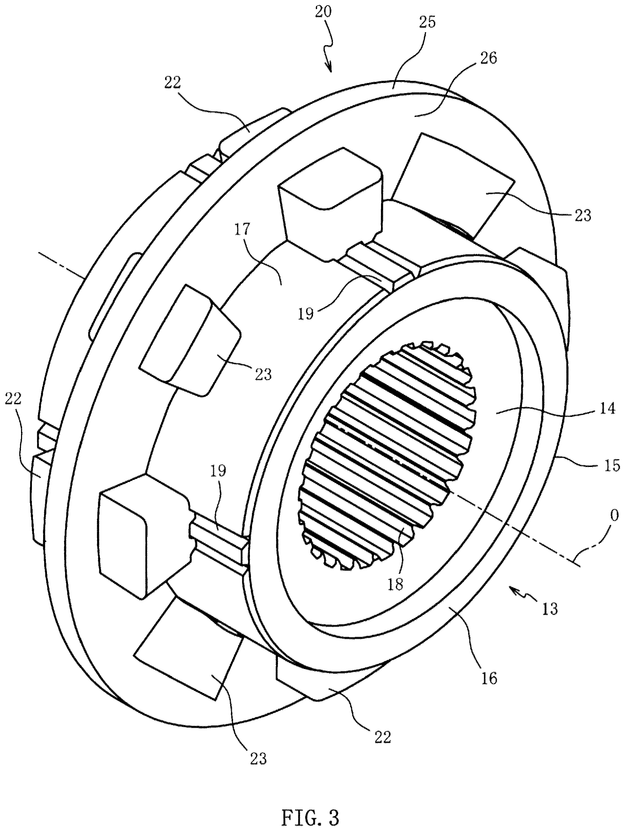

FIG. 3 is a perspective view of the hub 13 with the sleeve 20 disposed thereon. A spline 18 joined with the shaft 12 (Refer to FIG. 1) is formed in an inner circumferential surface of the inner circumferential part 14 of the hub 13. A groove 19 parallel to the center axis O is formed in an outer circumferential surface 17 of the outer circumferential part 15 of the hub 13. The groove 19 is provided throughout the axial length of the outer circumferential surface 17. In the present embodiment, the same number of the grooves 19 as the teeth 24 are formed in an area of the outer circumferential surface 17 of the hub 13 where the teeth 24 of the sleeve 20 are disposed. A length of each groove 19 is larger than a length of each tooth 24. Since the teeth 24 formed on the sleeve 20 are fit into the grooves 19 in the hub 13, the sleeve 20 can be axially moved relative to the hub 13 but the sleeve 20 cannot be rotated around the hub 13.

In the present embodiment, the grooves 19 are formed in parts (four places) of the outer circumferential surface 17 of the hub 13. Therefore, an amount of machining the grooves 19 can be suppressed as compared with cases where the grooves 19 are formed in the entire perimeter of the outer circumferential surface 17 of the hub 13. However, the present invention is not limited to this. The grooves 19 may be formed in the entire perimeter of the outer circumferential surface 17 of the hub 13, needless to add.

No special limitations are imposed on a shape of each groove 19 or tooth 24. The grooves 19 and the teeth 24 are appropriately set, for example, as those encircled with such a curve as an involute curve as laterally viewed or those in a rectangular shape. Further, the teeth 24 may be provided with a ball or a roller rolling in the grooves 19 or the grooves 19 may be provided with a ball or a roller on which the teeth 24 roll, needless to add. As a result, friction between the teeth 24 and the grooves 19 can be further reduced.

A description will be given to a method of a shift by the transmission 30 using the dog clutch 10. In the following description, a case where the dog clutch 10 is engaged with the first drive gear 32 will be taken as an example.

When power is communicated between the hub 13 rotating integrally with the shaft 12 and the first drive gear 32 idly rotating around the shaft 12, the sleeve 20 rotating integrally with the hub 13 is axially moved by the fork (not shown) and moves closer to the first drive gear 32. At this time, force in the rotation direction is exerted on the teeth 24 parallel to the center axis O and a part of each groove 19 extending in the axial direction is brought into contact with a part of each tooth 24 formed in protruding parts 21 extending in the axial direction. Since an axial length of each tooth 24 can be lengthened as compared with cases where the teeth 24 are formed only inside the coupling member 25, the moment of the sleeve 20 with which the fork applies force to the coupling member 25 can be suppressed. As a result, an inclination of the sleeve 20 to the center axis O of the hub 13 can be suppressed; therefore, the sleeve 20 is smoothly moved to the axial direction of the hub 13 without the sleeve 20 being inclined and locked.

Each first tooth 22 as a protruding part 21 of the sleeve 20 is longer than each second tooth 23. Consequently, when the sleeve 20 is rotated and moves closer to the first drive gear 32, first, a tooth tip of each first tooth 22 of the sleeve 20 hits a tooth tip of each protruding part 33 of the first drive gear 32. Since the first teeth 22 longer than the second teeth 23 in the axial direction exist among the protruding parts 21, engagement between the protruding parts 21 of the sleeve 20 and the protruding parts 33 of the first drive gear 32 can be facilitated. When the protruding parts 21 of the sleeve 20 and the protruding parts 33 of the first drive gear 32 are engaged with each other, the first drive gear 32 is rotated integrally with the shaft member 11 and the sleeve 20 and the sleeve 20 communicates power between the shaft member 11 and the first drive gear 32.

In the sleeve 20, the teeth 24 are formed in protruding parts 21. Therefore, when the protruding parts 21 are engaged with the protruding parts 33 of the first drive gear 32, torque is transmitted between the sleeve 20 and the hub 13 via the teeth 24 in protruding parts 21. Since the teeth 24 in protruding parts 21 are fit into the grooves 19 in the hub 13 (shaft member 11), bending stress on the protruding parts 21 can be more suppressed as compared with cases where the tooth 24 is not formed in protruding parts 21 and the teeth 24 are formed inside the coupling member 25. As a result, when the protruding parts 21 are engaged with the protruding parts 33 of the first drive gear 32, damaging to the coupling member 25 and the protruding parts 21 originating from a corner formed between each protruding part 21 and the coupling member 25 due to application of force in the rotation direction to the protruding parts 21 can be suppressed.

Since the strength of the protruding parts 21 is enhanced by providing protruding parts 21 with the teeth 24 engaged with the grooves 19 in the hub 13, increasing the rounding of corners (dedendum R) formed between the protruding parts 21 and the coupling member 25 and provision of a reinforcing rib to the corners are unnecessary for reinforcement of the protruding parts 21. If the roundness of corners formed between the protruding parts 21 and the coupling member 25 is increased or a reinforcing rib is provided, a problem of a reduced meshing depth of the protruding parts 21 arises. With the dog clutch 10, this problem can be prevented and a sufficient meshing depth of the protruding parts 21 can be ensured.

In the dog clutch 10, the teeth 24 are formed only in protruding parts 21. Therefore, reduction in a cross-sectional area of the coupling member 25 due to the teeth 24 can be more suppressed as compared with cases where the teeth 24 are formed not only in protruding parts 21 but also in the inner surface 27 of the coupling member 25 where a protruding part 21 is not formed. Consequently, degradation in the strength of the coupling member 25 can be suppressed. Further, an area of the teeth 24 rubbed against the grooves 19 can be reduced as compared with cases where the teeth 24 are formed not only in protruding parts 21 but also in the coupling member 25; therefore, friction between the grooves 19 and the teeth 24 can be suppressed.

According to the invention, in the dog clutch 10, the teeth 24 are formed only in the first teeth 22 of the protruding parts 21. In cases where the teeth 24 are formed also in the second teeth 23 in addition to the first teeth 22, when the first teeth 22 are engaged with the protruding parts 33 of the first drive gear 32, force in the rotation direction received by the first teeth 22 from the protruding parts 33 is transmitted to the hub 13 via the teeth 24 and is transmitted also to the second teeth 23. Due to a manufacturing error of the teeth 24 formed in the first teeth 22 and the second teeth 23, a case where force is exerted on the teeth 24 in the second teeth 23 and force is not exerted on the teeth 24 in the first teeth 22 may occur. When force exerted on the first teeth 22 by the protruding parts 33 of the first drive gear 32 is large in this case, the first teeth 22 can be damaged. To prevent this, the teeth 24 are formed only in the first teeth 22 of the protruding parts 21. Thus, when the first teeth 22 receive force from the protruding parts 33, the force can be prevented from being exerted on the second teeth 23.

Since all the teeth 24 are completely in an angle shape throughout the axial length of protruding parts 21, cross-sectional shapes of the teeth 24 orthogonal to the center axis O can be made identical. As a result, the strength of all the teeth 24 can be ensured. Consequently, when force in the rotation direction is exerted on the protruding parts 21, a corner of each tooth 24 can be prevented from being chipped or cracked.

Since a length of each groove 19 formed in the hub 13 is larger than a length of each tooth 24 formed in protruding parts 21, the teeth 24 can be prevented from being dislodged from the grooves 19 when the sleeve 20 is moved to outside the hub 13 in the axial direction. Therefore, an inclination of the sleeve 20 to the center axis O can be suppressed within a range within which the sleeve 20 is axially moved.

In cases where a length of each groove 19 of the hub 13 is made longer than a length of each tooth 24 of protruding parts 21, by making a length of the entire hub 13 equal to a length of each groove 19, an overall axial length is made longer when the first drive gear 32 and the second drive gear 36 are aligned on both sides of the hub 13. In the dog clutch 10, meanwhile, an axial length of the inner circumferential part 14 fixed on the shaft 12 is shorter than an axial length of the outer circumferential part 15 where the grooves 19 are formed. Further, axial ends 35, 39 of the cylindrical parts 34, 38 of the first drive gear 32 and the second drive gear 36 are radially positioned inside the tips 16 of the outer circumferential part 15 jutting out farther than the inner circumferential part 14 in the axial direction. As a result, an axial size can be reduced by an amount equivalent to the tips 16 and the ends 35 overlapping in the radial direction. Consequently, an axial size of the dog clutch 10 can be reduced.

Up to this point, a description has been given to the present invention based on an embodiment but the present invention is not limited to this embodiment. It is easily understood that the present invention can be variously improved or modified without departing from the subject matter thereof. For example, a number and a shape of the grooves 19 formed in the hub 13, a number and a shape of the protruding parts 21 of the sleeve 20, a shape of the coupling member 25, a number and a shape of the teeth 24 formed on the sleeve 20, and the like may be appropriately set. A shape of a section of the protruding parts 21 perpendicular to the center axis O may be appropriately set, for example, the cross-sectional shape may be a rectangle, a sector form, or the like.

In the description of the above embodiment, a case where the first teeth 22 and the second teeth 23 of the protruding parts 21 of the sleeve 20 are alternately disposed has been taken as an example but the present invention is not limited to this. Dispositions and numbers of the first teeth 22 and the second teeth 23 may be appropriately set. The axial lengths of all the protruding parts 21 may be made identical without providing the first teeth 22 or the second teeth 23, needless to add.

In the description of the above embodiment, a case where the dog clutch 10 is disposed on the drive side of the transmission 30 has been taken as an example but the present invention is not limited to this. The dog clutch 10 may be disposed on the driven side of the transmission 30, needless to add.

In the description of the above embodiment, a case where the dog clutch 10 is installed in the transmission 30 has been taken as an example but the present invention is not limited to this. Aside from a transmission, the dog clutch 10 may be installed in various devices requiring a function of communicating and interrupting power, needless to add.

In the description of the above embodiment, a case where the dog clutch 10 is installed in the transmission 30 has been taken as an example; therefore, the first drive gear 32 and the second drive gear 36 are taken as a mating member. When the dog clutch 10 is installed in various devices requiring a function of communicating and interrupting power, a mating member is appropriately set according to the device.

In the description of the above embodiment, a case where the teeth 24 formed in protruding parts 21 of the sleeve 20 continue to the teeth 24 formed in areas of the coupling member 25 sandwiched between protruding parts 21 has been taken as an example but the present invention is not limited to this. Of the teeth 24, teeth in areas of the coupling member 25 to which protruding parts 21 connect may be omitted, needless to add. This is because even when teeth in the coupling member 25 are omitted, bending stress on the protruding parts 21 can be suppressed because the teeth 24 are formed in protruding parts 21 on which force in the rotation direction is exerted when engagement is made.

In the description of the above embodiment, a case where the inner surface 27 of the coupling member 25 of the sleeve 20 and the inner surfaces 21a of the protruding parts 21 are on an identical cylindrical surface has been taken as an example but the present invention is not limited to this. For example, teeth 24 in areas of the coupling member 25 to which protruding parts 21 connect may be omitted and the inner surface 27 of the coupling member 25 may be disposed in a position farther away from the center axis O than the inner surfaces 21a of the protruding parts 21 are, needless to add. When the coupling member 25 coupling protruding parts 21 together is made linear, the inner surface 27 of the coupling member 25 need not be disposed on a cylindrical surface.

In the description of the above embodiment, a case where a mating member (the first drive gear 32, the second drive gear 36) is disposed on both sides of the sleeve 20 in the axial direction has been taken as an example but the present invention is not limited to this. A mating member having protruding parts may be disposed on either side of the sleeve 20, needless to add. In this case, the protruding parts 21 need not protrude on both sides of the coupling member 25 in the axial direction and protruding parts are provided on an end face of the sleeve on the side to which a mating member is opposed.

In the description of the above embodiment, a case where the shaft member 11 includes the shaft 12 and the cylindrical hub 13 has been taken as an example but the present invention is not limited to this. A shape and a structure of the shaft member 11 may be appropriately set as long as the grooves 19 into which the teeth 24 formed on the sleeve 20 are fit are formed in an outer circumferential surface of the shaft member 11.

In the description of the above embodiment, a case where the teeth 24 are formed only in the first teeth 22 of the protruding parts 21 has been taken as an example but the present invention is not limited to this. Aside from the first teeth 22, the teeth 24 may be provided in the second teeth 23 or the inner surface 27 of the coupling member 25, needless to add.

In the description of the above embodiment, a case where the hub 13 is provided with the inner circumferential part 14 and the outer circumferential part 15 different in axial length has been taken as an example but the present invention is not limited to this. A length of the entire hub 13 may be made identical with a length of each groove 19, needless to add.

10: dog clutch
11: shaft member
12: shaft
13: hub
14: inner circumferential part
15: outer circumferential part
16: tip
17: outer circumferential surface
19: groove
20: sleeve
21: protruding part
21a: inner surface
24: teeth
25: coupling member
26: end face
32: first drive gear (mating member)
36: second drive gear (mating member)
O: center axis

## Claims

1. A dog clutch (10) communicating and interrupting power on a center axis (O) of a shaft member (11), comprising:
a sleeve (20) disposed on the shaft member (11),
wherein a groove (19) is formed in an outer circumferential surface (17) of the shaft member (11) in parallel to the center axis (O),
wherein the sleeve (20) includes a coupling member (25) and a plurality of protruding parts (21) coupled together by the coupling member (25) around the center axis (O) at intervals in between and protruding from an end face (26) of the coupling member (25) in the axial direction, **characterized in that**
the protruding parts (21) include a first tooth (22) and a second tooth (23) different in the length of axial protrusion from the end face (26),
wherein the first tooth (22) is longer in axial protrusion from the end face (26) than the second tooth (23), and
wherein a tooth (24) parallel to the center axis (O) and fit into the groove (19) is formed at least on inner surfaces (21a) of the first tooth (22), and the tooth (24) is absent on inner surfaces (21a) of the second tooth (23).

2. The dog clutch (10) according to Claim 1,
wherein the tooth (24) is formed only in the protruding parts (21).

3. The dog clutch (10) according to Claim 1 or 2,
wherein the tooth (24) is completely in an angle shape throughout the axial length thereof.

4. The dog clutch (10) according to any of Claims 1 to 3, comprising:
a mating member (32) provided with protruding parts (33) engaged with the protruding parts (21) of the sleeve (20),
wherein the shaft member (11) includes a shaft (12) on which the mating member (32) is disposed and a cylindrical hub (13) disposed on the shaft (12) in alignment with the mating member (32) in the direction of an axial line,
wherein the hub (13) includes an inner circumferential part (14) fixed on the shaft (12) and an outer circumferential part (15) connecting to the outside of the inner circumferential part (14) in the radial direction and on which the sleeve (20) is disposed,
wherein the outer circumferential part (15) includes a tip (16) jutting out farther in the axial direction than the inner circumferential part (14), and
wherein a part of the mating member (32) exists inside the tip (16) in the radial direction.

## Patentansprüche

1. Klauenkupplung (10), die eine Kraft auf eine Mittelachse (O) eines Wellenelements (11) überträgt und unterbricht, umfassend:
eine Muffe (20), die auf dem Wellenelement (11) vorgesehen ist,
wobei eine Nut (19) in einer äußeren Umfangsoberfläche (17) des Wellenelements (11) parallel zu der Mittelachse (O) ausgebildet ist,
wobei die Muffe (20) ein Koppelelement (25) und eine Mehrzahl von vorstehenden Teilen (21) umfasst, die durch das Koppelelement (25) um die Mittelachse (O) herum in Intervallen dazwischen miteinander gekoppelt sind und von einer Endfläche (26) des Koppelelements (25) in der axialen Richtung vorstehen, **dadurch gekennzeichnet, dass**
die vorstehenden Teile (21) einen ersten Zahn (22) und einen zweiten Zahn (23) umfassen, die sich in der Länge des axialen Vorsprungs von der Endfläche (26) unterscheiden,
wobei der erste Zahn (22) einen längeren axialen Vorsprung von der Endfläche (26) aufweist als der zweite Zahn (23), und
wobei ein Zahn (24), der parallel zu der Mittelachse (O) ist und in die Nut (19) passt, zumindest auf inneren Oberflächen (21a) des ersten Zahns (22) ausgebildet ist, und der Zahn (24) auf inneren Oberflächen (21a) des zweiten Zahns (23) fehlt.

2. Die Klauenkupplung (10) gemäß Anspruch 1,
wobei der Zahn (24) nur in den vorstehenden Teilen (21) ausgebildet ist.

3. Die Klauenkupplung (10) gemäß Anspruch 1 oder 2,
wobei der Zahn (24) über seine gesamte axiale Länge vollständig in einer Winkelform vorliegt.

4. Die Klauenkupplung (10) gemäß einem der Ansprüche 1 bis 3, umfassend:
ein zusammenpassendes Element (32), das mit vorstehenden Teilen (33) versehen ist, die mit den vorstehenden Teilen (21) der Muffe (20) in Eingriff stehen,
wobei das Wellenelement (11) eine Welle (12), auf der das zusammenpassende Element (32) angeordnet ist, und eine zylindrische Nabe (13) umfasst, die auf der Welle (12) in Ausrichtung mit dem zusammenpassenden Element (32) in der Richtung einer axialen Linie angeordnet ist,
wobei die Nabe (13) einen inneren Umfangsteil (14), der auf der Welle (12) befestigt ist, und einen äußeren Umfangsteil (15), der an die Außenseite des inneren Umfangsteils (14) in der radialen Richtung anschließt und auf dem die Muffe (20) angeordnet ist, umfasst,
wobei der äußere Umfangsteil (15) eine Spitze (16) umfasst, die weiter in der axialen Richtung vorsteht als der innere Umfangsteil (14), und
wobei ein Teil des zusammenpassenden Elements (32) innerhalb der Spitze (16) in der radialen Richtung vorhanden ist.

## Revendications

1. Embrayage à griffes (10) communiquant et interrompant la puissance sur un axe central (O) d'un élément d'arbre (11), comprenant :
un manchon (20) disposé sur l'élément d'arbre (11),
dans lequel une rainure (19) est formée dans une surface circonférentielle extérieure (17) de l'élément d'arbre (11) parallèlement à l'axe central (O),
dans lequel le manchon (20) comprend un élément de couplage (25) et une pluralité de parties saillantes (21) couplées entre elles par l'élément de couplage (25) autour de l'axe central (O) à des intervalles intermédiaires et faisant saillie d'une face d'extrémité (26) de l'élément de couplage (25) dans la direction axiale, **caractérisé en ce que**
les parties saillantes (21) comprennent une première dent (22) et une seconde dent (23) différentes en termes de longueur de saillie axiale à partir de la face d'extrémité (26),
dans lequel la première dent (22) est plus longue en saillie axiale de la face d'extrémité (26) que la seconde dent (23), et
dans lequel une dent (24) parallèle à l'axe central (O) et ajustée dans la rainure (19) est formée au moins sur les surfaces intérieures (21a) de la première dent (22), et la dent (24) est absente sur les surfaces intérieures (21a) de la seconde dent (23).

2. Embrayage à griffes (10) selon la revendication 1,
dans lequel la dent (24) est formée uniquement dans les parties saillantes (21).

3. Embrayage à griffes (10) selon la revendication 1 ou 2,
dans lequel la dent (24) est complètement en forme d'angle sur toute sa longueur axiale.

4. Embrayage à griffes (10) selon l'une quelconque des revendications 1 à 3, comprenant :
un élément d'accouplement (32) muni de parties saillantes (33) en prise avec les parties saillantes (21) du manchon (20),
dans lequel l'élément d'arbre (11) comprend un arbre (12) sur lequel l'élément d'accouplement (32) est disposé et un moyeu cylindrique (13) disposé sur l'arbre (12) en alignement avec l'élément d'accouplement (32) dans la direction d'une ligne axiale,
dans lequel le moyeu (13) comprend une partie circonférentielle intérieure (14) fixée sur l'arbre (12) et une partie circonférentielle extérieure (15) se connectant à l'extérieur de la partie circonférentielle intérieure (14) dans la direction radiale et sur laquelle le manchon (20) est disposé,
dans lequel la partie circonférentielle extérieure (15) comprend une pointe (16) faisant saillie plus loin dans la direction axiale que la partie circonférentielle intérieure (14), et
dans lequel une partie de l'élément d'accouplement (32) existe à l'intérieur de la pointe (16) dans la direction radiale.
